# FASCICULE DE BREVET EUROPEEN

(11) **EP 3 572 331 B1**
(45) Date de publication et mention de la délivrance du brevet: **25.11.2020**
(21) Numéro de dépôt: 19168772.2
(22) Date de dépôt: 11.04.2019
(51) Int. Cl.: B64D 29/06

(54) **AERONEF COMPRENANT AU MOINS UN CAPOT EQUIPE D'UN SYSTEME D'ARTICULATION AMELIORE**
LUFTFAHRZEUG, DAS MINDESTENS EINE MIT EINEM VERBESSERTEN GELENKSYSTEM AUSGESTATTETE ABDECKUNG UMFASST
AIRCRAFT COMPRISING AT LEAST ONE COVER PROVIDED WITH AN IMPROVED CONNECTION SYSTEM

(30) Priorité: 22.05.2018 FR 1854213
(43) Date de publication de la demande: 27.11.2019
(73) Titulaire: Airbus Operations S.A.S., 31060 Toulouse (FR)
(72) Inventeur: GELIOT, Jean, 31400 TOULOUSE (FR); SOULIE, Adeline, 82600 VERDUN SUR GARONNE (FR)
(74) Mandataire: Gicquel, Olivier Yves Gérard

(56) Documents cités:
- EP-A1- 2 862 805
- WO-A1-2014/009616
- FR-A1- 2 920 141

## Description

La présente demande se rapporte à un aéronef comprenant au moins un capot équipé d'un système d'articulation amélioré.

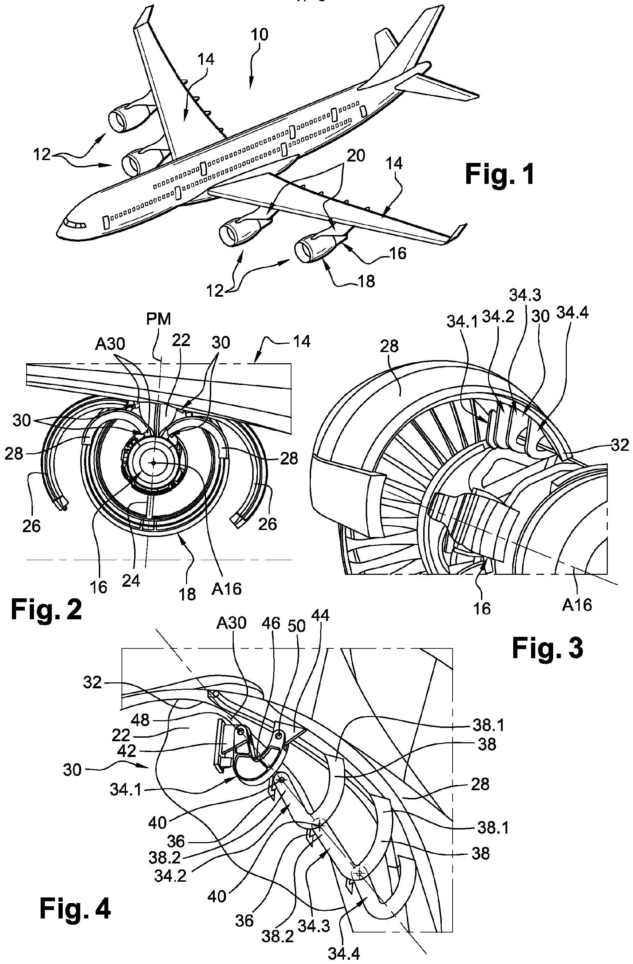

Selon une configuration visible sur la figure 1, un aéronef 10 comprend plusieurs ensembles moteurs 12 positionnés sous la voilure 14.

Comme illustré sur les figures 1 et 2, un ensemble moteur 12 comprend :
- un moteur 16 dans lequel circule un flux primaire d'air,
- une nacelle 18 positionnée autour du moteur 16 de manière à délimiter avec ce dernier un conduit annulaire dans lequel s'écoule un flux secondaire d'air, et
- un mât 20 qui assure la liaison entre le moteur 16 et la voilure 14.

Des bifurcations supérieure et inférieure 22, 24, positionnées dans un plan médian PM passant par l'axe moteur A16, relient la nacelle 18 et le moteur 16.

Le moteur 16 et la nacelle 18 comprennent chacun au moins un capot 26, 28 mobile entre une position ouverte visible sur la figure 2 et une position fermée visible sur la figure 1. Généralement, le moteur 16 et la nacelle 18 comprennent chacun deux capots 26, 28 disposés de manière symétrique par rapport au plan médian PM.

Comme illustré sur les figures 3 et 4, chaque ensemble moteur 12 comprend, pour chaque capot 26, 28, un système d'articulation 30 qui relie un bord d'attache du capot 32 et une structure fixe, comme par exemple la bifurcation supérieure 22 ou toute autre partie fixe du moteur 16 ou de la nacelle 18. Le système d'articulation 30 présente un axe de pivotement A30 globalement parallèle à l'axe moteur A16.

Sur le plan géométrique, le capot 26, 28 présente un premier rayon de courbure dans un plan perpendiculaire à l'axe moteur A16 et un deuxième rayon de courbure dans un plan passant par l'axe moteur A16.

Selon un mode de réalisation illustré par les figures 3 et 4, le système d'articulation 30 comprend quatre charnières 34.1 à 34.4, réparties le long du bord d'attache 32. Le nombre de charnières est déterminé notamment pour assurer la reprise des efforts orientés selon une direction perpendiculaire à l'axe de pivotement A30 lorsque le capot 30 est en position fermée.

Les deuxième et troisième charnières 34.2 et 34.2, positionnées entre les première et quatrième charnières 34.1, 34.4, présentent chacune une première partie 36, solidaire de la structure fixe, ainsi qu'une deuxième partie 38 en forme de col de cygne qui comporte une première extrémité 38.1, solidaire du capot 28, et une deuxième extrémité 38.2 reliée à la première partie 36 par au moins un arbre de pivotement 40.

La première charnière 34.1 présente une première partie 42 solidaire de la structure fixe, une deuxième partie 44 solidaire du capot 26, 28, une troisième partie 46 en forme de col de cygne intercalée entre les première et deuxième parties 42, 44, un premier arbre de pivotement 48 reliant la première partie 42 et une première extrémité de la troisième partie 46 ainsi qu'un deuxième arbre de pivotement 50 reliant la deuxième partie et une deuxième extrémité de la troisième partie 46.

La quatrième charnière 34.4 peut être identique aux deuxième et troisième charnières 34.2, 34.3 ou à la première charnière 34.1 ou totalement flottante. Quel que soit son mode de réalisation, la quatrième charnière 34.4 comprend au moins deux parties, une première partie solidaire de la structure fixe, une deuxième partie solidaire du capot 26, 28 ainsi qu'au moins un arbre de pivotement reliant les parties deux à deux.

Quel que soit le mode de réalisation, chaque charnière comprend une forme en col de cygne permettant d'augmenter l'écartement entre le capot et les parties fixes de la nacelle et du moteur lorsque le capot est en position ouverte.

De plus, les arbres de pivotement 40, 48, supportés par les parties des charnières solidaires de la structure fixe, sont alignés comme illustré sur la figure 4.

Compte tenu de la forme en col de cygne et de l'alignement des arbres de pivotement, les deuxième et troisième charnières 34.2 et 34.3 sont relativement encombrantes lorsque le capot est en position fermée.

La demande de brevet EP2862805 ou le brevet FR2920141 décrivent les caractéristiques indiquées dans le préambule de la revendication 1

La présente invention vise à remédier à tout ou partie des inconvénients de l'art antérieur.

A cet effet, l'invention a pour objet un aéronef tel que revendiqué dans la revendication 1. Le couple de butées assure la reprise d'une partie des efforts entre le capot et la structure fixe lorsque le capot est en position fermée. Ainsi, l'une des charnières du système d'articulation de l'art antérieur (plus particulièrement sa forme en col de cygne) peut être supprimée ce qui permet de réduire l'encombrement du système d'articulation.

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
- La figure 1 est une vue en perspective d'un aéronef,
- La figure 2 est une vue arrière d'un ensemble moteur comportant des capots en position ouverte,
- La figure 3 est une vue en perspective d'un système d'articulation d'un capot qui illustre un mode de réalisation de l'art antérieur,
- La figure 4 est une représentation schématique d'un système d'articulation d'un capot qui illustre l'art antérieur,
- La figure 5 est une représentation schématique d'un système d'articulation d'un capot qui illustre un premier mode de réalisation de l'invention,
- La figure 6 est une vue en perspective d'un couple de butées du système d'articulation visible sur la figure 5, le capot étant en position ouverte,
- La figure 7 est une vue en perspective du couple de butées du système d'articulation, le capot étant en position fermée,
- La figure 8 est une coupe selon le plan P8 de la figure 7,
- La figure 9 est une coupe d'un couple de butées d'un système d'articulation d'un capot qui illustre un deuxième mode de réalisation,
- La figure 10 est une représentation schématique montrant les différences entre des charnières d'un système d'articulation de l'art antérieur et des charnières du système d'articulation visible sur la figure 5,
- La figure 11 est une représentation schématique montrant les différences entre des charnières d'un système d'articulation de l'art antérieur et des charnières du système d'articulation visible sur la figure 5,

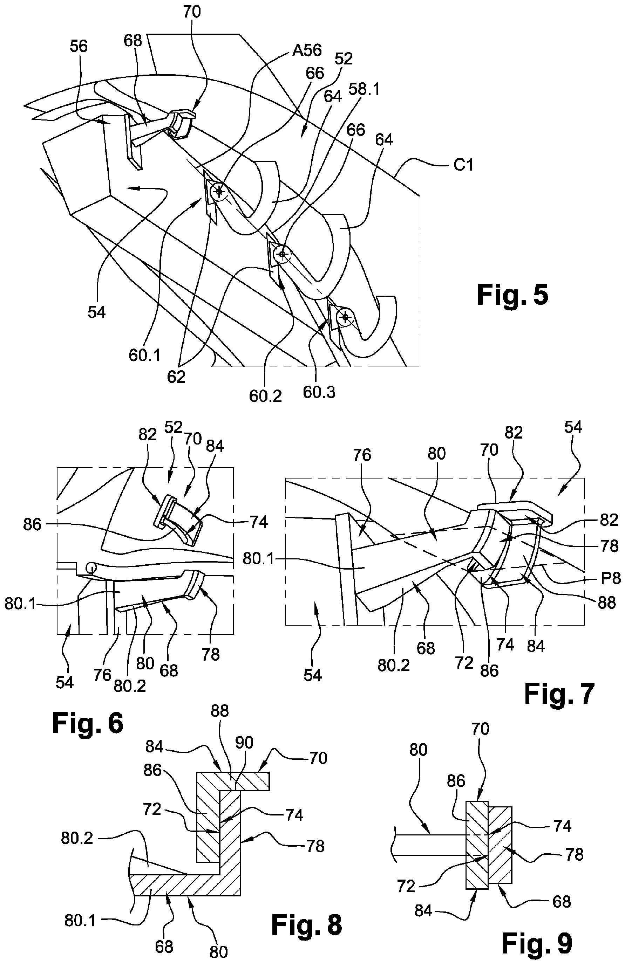

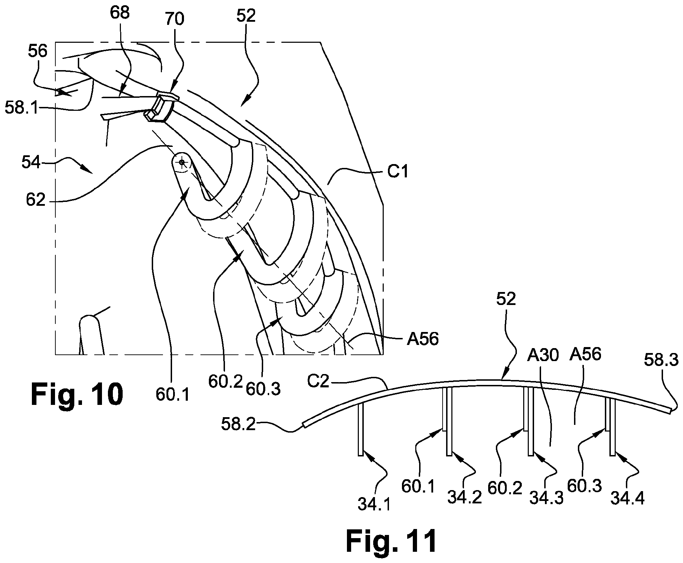

Sur les figures 5 et 10, on a représenté un capot 52, une structure fixe 54 qui présente une ouverture ainsi qu'un système d'articulation 56 qui relie le capot 52 et la structure fixe 54.

Ainsi, le capot 52 est mobile en rotation autour d'un axe de pivotement A56 entre une position fermée dans laquelle le capot 52 obture l'ouverture et une position ouverte dans laquelle il dégage au moins partiellement l'ouverture, une position totalement ouverte correspondant à l'ouverture maximale du capot 52.

Selon une configuration, le capot 52 est un capot d'un moteur d'aéronef ou d'une nacelle d'aéronef, comme illustré sur la figure 2. La structure fixe 54 est une bifurcation supérieure d'un ensemble moteur d'aéronef ou toute autre partie fixe de la nacelle ou du moteur. L'axe de pivotement A56 est globalement parallèle à l'axe moteur.
Selon une configuration, le capot 52 présente une première courbure C1 (visible sur la figure 10) dans un plan perpendiculaire à une première direction qui est approximativement parallèle à l'axe de pivotement A56 et une deuxième courbure C2 (visible sur la figure 11) dans un plan contenant l'axe de pivotement A56.

Le capot 52 présente un bord supérieur (visible sur les figures 5 et 11), appelé par la suite bord d'attache 58.1, qui s'étend d'un premier bord latéral 58.2 (approximativement perpendiculaire à l'axe de pivotement A56) jusqu'à un deuxième bord latéral 58.3 (approximativement perpendiculaire à l'axe de pivotement A56).

Le système d'articulation 30 comprend au moins deux charnières 60.1, 60.2 qui présentent chacune au moins deux parties, une première partie 62 solidaire de la structure fixe 54 et une deuxième partie 64 solidaire du capot 52 ainsi qu'au moins un arbre de pivotement 66 reliant les parties deux à deux, l'une des parties ayant une forme en col de cygne. Les arbres de pivotement 66 des charnières 60.1, 60.2 sont alignés et forment l'axe de pivotement A56 du système d'articulation 56.

Selon une configuration, le système d'articulation 56 comprend trois charnières 60.1 à 60.3 qui, hormis le positionnement de leurs premières parties 62, sont identiques aux deuxième, troisième et quatrième charnières du système d'articulation de l'art antérieur. Les premières parties 62 de ces trois charnières 60.1 à 60.3 sont positionnées, selon une direction parallèle à l'axe de pivotement A56, de la même manière que les deuxième, troisième et quatrième charnières du système d'articulation de l'art antérieur.

Le système d'articulation 56 comprend au moins un couple de butées 68, 70, une première butée 68 solidaire de la structure fixe 54 et une deuxième butées 70 solidaire du capot 52, les première et deuxième butées 68, 70 étant configurées pour coopérer l'une contre l'autre lorsque le capot 52 est en position fermée afin d'immobiliser le capot 52 par rapport à la structure fixe 54 au moins selon une direction perpendiculaire à l'axe de pivotement A56. Ainsi, en position fermée, le couple de butées assure la reprise d'une partie des efforts orientés selon une direction perpendiculaire à l'axe de pivotement A56 lorsque le capot est en position fermée et empêche l'ouverture du capot en raison d'une poussée interne.

Le couple de butées 68, 70 est positionné à proximité d'un des bords latéraux du capot, notamment à proximité du premier bord latéral 58.2 le plus proche de l'axe moteur, ce qui permet d'écarter les autres charnières dudit bord latéral.

Les première et deuxième butées 68, 70 présentent respectivement des première et deuxième surfaces de contact 72, 74 configurées pour être en contact l'une contre l'autre lorsque le capot 52 est en position fermée.

Selon une configuration, les première et deuxième butées 68, 70 sont configurées pour être décalées l'une par rapport à l'autre au moins lorsque le capot est en position totalement ouverte, comme illustré sur la figure 6. Dans cette position, les première et deuxième surfaces de contact 72, 74 ne coopèrent plus et ne sont plus en contact l'une contre l'autre.

Selon un premier mode de réalisation visible sur les figure 5 à 8, les première et deuxième surfaces de contact sont des surfaces courbes et correspondent chacune à une portion de cylindre ayant un axe de révolution confondu avec l'axe de pivotement A56.

Selon ce premier mode de réalisation, la première butée 68 comprend :
- une platine 76 comportant une plaque fixée par tous moyens appropriés à la structure fixe 54,
- une tête 78 comportant une plaque dont une face orientée vers la platine 76 forme la première surface de contact 72, et
- un corps 80 comportant une première extrémité reliée à la platine 76 et une deuxième extrémité reliée à la tête 78. La platine 76, le corps 80 et la tête 78 ne forment qu'une unique et même pièce.

Selon une configuration, le corps 80 a une section en forme de L et s'étend selon une direction approximativement perpendiculaire à la plaque de la platine 76. Le corps 80 présente une première aile 80.1, positionnée dans un plan perpendiculaire à l'axe de pivotement A56 et une deuxième aile 80.2, perpendiculaire à la première aile 80.1, en forme de triangle, la base du triangle étant collée contre la platine 76, un des sommets du triangle étant orienté vers la tête 78. La deuxième aile 80.2 est écartée de la première surface de contact 72 pour permettre le passage de la deuxième butée 70, comme illustré sur la figure 8.

Selon le premier mode de réalisation, la deuxième butée 70 comprend :
- une platine 82 comportant une plaque fixée par tous moyens appropriés au capot 52,
- un corps 84 avec une section en L dont une première extrémité est reliée à la platine 82 et qui présente :
   ∘ une première aile 86, sous la forme d'une plaque cylindrique, qui présente un axe de révolution confondu avec l'axe de pivotement A56 et une face formant la deuxième surface de contact 74, et
   ∘ une deuxième aile 88, sous la forme d'une plaque, positionnée dans un plan perpendiculaire à l'axe de pivotement A56.

Lorsque le capot 52 est en position fermée, la première aile 86, positionnée entre la platine 76 et la tête 78 de la première butée 68, est en contact avec la tête 78 de la première butée 68 et la deuxième aile 88 est en contact avec un chant 90 de la tête 78 (visible sur la figure 8).
La première aile 84 étant en contact avec la tête 78, les première et deuxième butées 68, 70 sont immobilisées l'une par rapport à l'autre en translation selon une direction approximativement perpendiculaire à l'axe de pivotement A56.

La deuxième aile 88 étant en contact avec le chant 90 de la tête 78, les première et deuxième butées 68, 70 sont immobilisées l'une par rapport à l'autre en translation selon une direction parallèle à l'axe de pivotement A56, dans un seul sens.

Selon un deuxième mode de réalisation visible sur la figure 9, le corps 84 de la deuxième butée 70 ne comprend qu'une aile 86 sous la forme d'une plaque cylindrique qui présente un axe de révolution confondu avec l'axe de pivotement A56 et une face formant la deuxième surface de contact 74.

Comme pour le premier mode de réalisation, lorsque le capot 52 est en position fermée, la première aile 86, positionnée entre la platine 76 et la tête 78 de la première butée 68, est en contact avec la tête 78 de la première butée 68. Ainsi, les première et deuxième butées 68, 70 sont immobilisées l'une par rapport à l'autre en translation selon une direction approximativement perpendiculaire à l'axe de pivotement A56. Contrairement au premier mode de réalisation, les première et deuxième butées 68, 70 ne sont pas immobilisées l'une par rapport à l'autre en translation selon une direction parallèle à l'axe de pivotement A56.

L'invention procure les avantages suivants :
Comme illustré sur la figure 11, aucune charnière n'étant positionnée à proximité du premier bord latéral 58.2, l'axe de pivotement A56 du système d'articulation est disposé plus haut que l'axe de pivotement A30 du système d'articulation de l'art antérieur. Par conséquent, comme illustré sur la figure 10, les parties les plus basses des formes en col de cygne des charnières sont positionnées plus haut et sont donc moins encombrantes.

Par ailleurs, le remplacement de la première charnière et donc de sa forme en col de cygne par un couple de butées permet d'obtenir un système d'articulation moins encombrant.

## Revendications

1. Aéronef comprenant au moins un capot (52), une structure fixe (54) qui présente une ouverture, un système d'articulation (56) reliant le capot (52) à la structure fixe (54), ledit capot (52) étant mobile en rotation autour d'un axe de pivotement (A56) entre une position fermée dans laquelle le capot (52) obture l'ouverture et une position ouverte dans laquelle le capot (52) dégage au moins partiellement l'ouverture, ledit système d'articulation (56) comportant au moins deux charnières (60.1, 60.2) dont chacune présente au moins deux parties avec une première partie (62) solidaire de la structure fixe (54) et une deuxième partie (64) solidaire du capot (52) ainsi qu'au moins un arbre de pivotement (66) reliant les parties deux à deux, l'une des parties présentant une forme en col de cygne, les arbres de pivotement (66) des charnières (60.1, 60.2) étant alignés et formant l'axe de pivotement (A56), **caractérisé en ce que** le système d'articulation (56) comprend au moins un couple de butées (68, 70) dont une première butée (68) solidaire de la structure fixe (54) et une deuxième butée (70) solidaire du capot (52), les première et deuxième butées (68, 70) comprenant respectivement des première et deuxième surfaces de contact (72, 74) qui sont des portions de cylindre présentant un axe de révolution confondu avec l'axe de pivotement (A56), lesdites surfaces de contact étant configurées pour être en contact l'une contre l'autre lorsque le capot (52) est en position fermée, **en ce que** la première butée (68) comprend une platine (76) fixée à la structure fixe (54), une tête (78) présentant une face orientée vers la platine (76), formant la première surface de contact (72) et un corps (80) reliant la platine (76) et la tête (78) et **en ce que** la deuxième butée (70) comprend au moins une première aile (86) reliée au capot (52), ladite aile (86) ayant une forme de plaque cylindrique qui présente un axe de révolution confondu avec l'axe de pivotement (A56) et une face formant la deuxième surface de contact (74) de telle sorte que les surfaces de contact assurent une reprise d'une partie des efforts orientés selon une direction perpendiculaire à l'axe de pivotement (A56) lorsque le capot (52) est en position fermée.

2. Aéronef selon la revendication 1, **caractérisé en ce que** le couple de butées (68, 70) est positionné à proximité d'un des bords latéraux du capot (52).

3. Aéronef selon la revendication 1 ou 2, **caractérisé en ce que** les première et deuxième butées (68, 70) sont configurées pour être décalées l'une par rapport à l'autre au moins lorsque le capot est en position ouverte.

4. Aéronef selon l'une quelconque des revendications 1 à 3, **caractérisé en ce que** la deuxième butée (70) comprend une deuxième aile (88), sous la forme d'une plaque, positionnée dans un plan perpendiculaire à l'axe de pivotement (A56), ladite deuxième aile (88) étant configurée pour être en contact avec un chant (90) de la tête (78) de la première butée (68) lorsque le capot (52) est en position fermée.

## Patentansprüche

1. Luftfahrzeug, umfassend mindestens eine Abdeckung (52), eine feste Struktur (54), die eine Öffnung aufweist, ein Gelenksystem (56), das die Abdeckung (52) mit der festen Struktur (54) verbindet, wobei die Abdeckung (52) um eine Schwenkachse (A56) zwischen einer geschlossenen Position, in der die Abdeckung (52) die Öffnung verdeckt, und einer geöffneten Position, in der die Abdeckung (52) die Öffnung zumindest teilweise freilegt, drehbeweglich ist, wobei das Gelenksystem (56) mindestens zwei Scharniere (60.1, 60.2) aufweist, von denen jedes mindestens zwei Teile, wobei ein erster Teil (62) mit der festen Struktur (54) fest verbunden ist und ein zweiter Teil (64) mit der Abdeckung (52) fest verbunden ist, sowie mindestens eine Schwenkwelle (66), die Teile jeweils paarweise verbindet, hat, wobei einer der Teile eine Schwanenhalsform aufweist, wobei die Schwenkwellen (66) der Scharniere (60.1, 60.2) aufeinander ausgerichtet sind und die Schwenkachse (A56) bilden, **dadurch gekennzeichnet, dass** das Gelenksystem (56) mindestens ein Paar Anschläge (68, 70) umfasst, von denen ein erster Anschlag (68) mit der festen Struktur (54) fest verbunden ist und ein zweiter Anschlag (70) mit der Abdeckung (52) fest verbunden ist, wobei der erste und der zweite Anschlag (68, 70) jeweils eine erste und zweite Kontaktfläche (72, 74) aufweisen, die Zylinderteile sind, welche eine Rotationsachse aufweisen, die mit der Schwenkachse (A56) zusammenfällt, wobei die Kontaktflächen dazu konfiguriert sind, miteinander in Kontakt zu sein, wenn sich die Abdeckung (52) in geschlossener Position befindet, dass der erste Anschlag (68) eine Platte (76), die an der festen Struktur (54) fixiert ist, einen Kopf (78), der eine zu der Platte (76) ausgerichtete Fläche aufweist, die die erste Kontaktfläche (72) bildet, und einen Körper (80), der die Platte (76) und den Kopf (78) verbindet, umfasst, und dass der zweite Anschlag (70) mindestens einen ersten Flügel (86), der mit der Abdeckung (52) verbunden ist, wobei der Flügel (86) die Form einer zylindrischen Platte aufweist, die eine Rotationsachse hat, welche mit der Schwenkachse (A56) zusammenfällt, und eine Fläche umfasst, die die zweite Kontaktfläche (74) bildet, derart, dass die Kontaktflächen eine Aufnahme eines Teils der Kräfte gewährleisten, die entlang einer senkrecht zu der Schwenkachse (A56) verlaufenden Richtung ausgerichtet sind, wenn sich die Abdeckung (52) in geschlossener Position befindet.

2. Luftfahrzeug nach Anspruch 1, **dadurch gekennzeichnet, dass** das Paar Anschläge (68, 70) in der Nähe eines der Seitenränder der Abdeckung (52) positioniert ist.

3. Luftfahrzeug nach Anspruch 1 oder 2, **dadurch gekennzeichnet, dass** der erste und der zweite Anschlag (68, 70) dahingehend konfiguriert sind, zumindest, wenn sich die Abdeckung in geöffneter Position befindet, bezüglich einander versetzt zu sein.

4. Luftfahrzeug nach einem der Ansprüche 1 bis 3, **dadurch gekennzeichnet, dass** der zweite Anschlag (70) einen zweiten Flügel (88) in Form einer Tafel umfasst, der in einer senkrecht zu der Schwenkachse (A56) verlaufenden Ebene positioniert ist, wobei der zweite Flügel (88) dahingehend konfiguriert ist, mit einer Kante (90) des Kopfs (78) des ersten Anschlags (68) in Kontakt zu sein, wenn sich die Abdeckung (52) in geschlossener Position befindet.

## Claims

1. Aircraft comprising at least one cover (52), a fixed structure (54) which has an opening, an articulation system (56) connecting the cover (52) to the fixed structure (54), said cover (52) being able to move in rotation about a pivot axis (A56) between a closed position in which the cover (52) closes off the opening and an open position in which the cover (52) at least partially frees the opening, said articulation system (56) comprising at least two hinges (60.1, 60.2) each of which has at least two parts with a first part (62) secured to the fixed structure (54) and a second part (64) secured to the cover (52) and at least one pivot shaft (66) connecting the parts in pairs, one of the parts having a gooseneck shape, the pivot shafts (66) of the hinges (60.1, 60.2) being aligned and forming the pivot axis (A56), **characterized in that** the articulation system (56) comprises at least one pair of stops (68, 70) including a first stop (68) secured to the fixed structure (54) and a second stop (70) secured to the cover (52), the first and second stops (68, 70) respectively comprising first and second contact surfaces (72, 74) which are cylinder portions having an axis of revolution that coincides with the pivot axis (A56), said contact surfaces being configured to be in contact against one another when the cover (52) is in the closed position, **in that** the first stop (68) comprises a plate (76) fixed to the fixed structure (54), a head (78) having a face oriented towards the plate (76), forming the first contact surface (72) and a body (80) connecting the plate (76) and the head (78), and **in that** the second stop (70) comprises at least one first wing (86) connected to the cover (52), said wing (86) being in the shape of a cylindrical panel that has an axis of revolution which coincides with the pivot axis (A56) and a face forming the second contact surface (74) such that the contact surfaces ensure a resumption of some of the forces oriented in a direction perpendicular to the pivot axis (A56) when the cover (52) is in the closed position.

2. Aircraft according to Claim 1, **characterized in that** the pair of stops (68, 70) is positioned close to one of the lateral edges of the cover (52).

3. Aircraft according to Claim 1 or 2, **characterized in that** the first and second stops (68, 70) are configured so as to be offset with respect to one another at least when the cover is in the open position.

4. Aircraft according to any one of Claims 1 to 3, **characterized in that** the second stop (70) comprises a second wing (88), in the form of a panel, positioned in a plane perpendicular to the pivot axis (A56), said second wing (88) being configured to be in contact with an edge face (90) of the head (78) of the first stop (68) when the cover (52) is in the closed position.
